# EUROPÄISCHE PATENTSCHRIFT

(11) **EP 4 350 409 B1**
(45) Veröffentlichungstag und Bekanntmachung des Hinweises auf die Patenterteilung: **24.07.2024**
(21) Anmeldenummer: 22200401.2
(22) Anmeldetag: 07.10.2022
(51) Int. Cl.: G02B 6/44

(54) **MODULBAUGRUPPE, TRÄGEREINHEIT UND TRÄGERANORDNUNG FÜR DIE FASEROPTISCHE VERTEILERTECHNIK**
MODULE ASSEMBLY, SUPPORT UNIT AND SUPPORT ASSEMBLY FOR OPTICAL FIBRE DISTRIBUTION TECHNOLOGY
ENSEMBLE MODULAIRE, UNITÉ DE SUPPORT ET ENSEMBLE SUPPORT POUR LA TECHNIQUE DE DISTRIBUTION DE FIBRES OPTIQUES

(43) Veröffentlichungstag der Anmeldung: 10.04.2024
(73) Patentinhaber: Rosenberger-OSI GmbH & Co. OHG, 86167 Augsburg (DE)
(72) Erfinder: Brücher, Luis, 13465 Berlin (DE); Heimer, Danny, 83714 Miesbach (DE); Schlomka, Sven, 81241 München (DE); Weigand, Benjamin, 86150 Augsburg (DE); Mayr, Harald, 86735 Amerdingen (DE)
(74) Vertreter: Lorenz, Matthias

(56) Entgegenhaltungen:
- WO-A1-2012/020225
- DE-A1- 102018 106 262
- US-A1- 2018 020 269
- US-A1- 2019 121 046

## Beschreibung

Die Erfindung betrifft Modulbaugruppen für die faseroptische Verteilertechnik, die entlang einer Montagerichtung in einem Steckplatz einer separaten Trägereinheit montierbar sind, gemäß dem Oberbegriff des Anspruchs 1 und dem Oberbegriff des Anspruchs 4.

Die Erfindung betrifft außerdem Trägereinheiten für die faseroptische Verteilertechnik, mit einer Trägerplatte, welche wenigstens einen Steckplatz für jeweils zumindest eine Modulbaugruppe aufweist, gemäß dem Oberbegriff des Anspruchs 7 und dem Oberbegriff des Anspruchs 8.

Die Erfindung betrifft ferner eine Trägeranordnung, aufweisend eine Trägereinheit sowie zumindest eine in einem Steckplatz montierte Modulbaugruppe.

In Rechenzentren werden mitunter Trägereinheiten, insbesondere einzelne Einschubfächer ("Trays") bis hin zu so genannten Rangierfeldern (auch "Patchfelder" oder "Patchpanels" genannt) zum Herstellen und Verteilen von Datenverbindungen, beispielsweise über Netzwerkkabel, Telefonkabel oder Glasfaserkabel, verwendet. In der Praxis sind häufig mehrere Rangierfelder in einem gemeinsamen Verteilerrahmen (auch "Rack" genannt) in verschiedenen Höhenlagen installiert.

Ein Rangierfeld umfasst in der Regel zumindest eine Schnittstelle ("Interface") mit einer bestimmten Anzahl einzelner oder in Modulen bzw. Modulbaugruppen (auch "Kassetten" genannt) gruppierter Anschlüsse bzw. Steckverbinder. Derartige Modulbaugruppen bzw. Kassetten weisen in der Regel jeweils eine vorderseitige Schnittstelle mit einem oder mehreren ersten optischen Verbindern (z. B. Steckverbinder) auf, sowie eine rückseitige Schnittstelle mit einem oder mehreren zweiten optischen Verbindern (z. B. Steckverbinder). Häufig ist die Anzahl erster Verbinder der eingangsseitigen Schnittstelle größer als die Anzahl zweiter Verbinder der ausgangsseitigen Schnittstelle, wobei die Einzelverbindungen innerhalb der Modulbaugruppe dementsprechend zwischen den beiden Schnittstellen verteilt werden.

Für die Montage der einzelnen Modulbaugruppen auf einer gemeinsamen Trägereinheit sind aus dem Stand der Technik insbesondere zwei Konzepte bekannt.

Eine Möglichkeit sind so genannte frontrahmenbasierte Systeme, bei denen die Trägereinheit einen frontseitigen Montagerahmen aufweist, der für die jeweiligen Modulbaugruppen Ausnehmungen aufweist, sowie Stanzlöcher zur Fixierung des Außengehäuses der Modulbaugruppe. Ein derartiges Konzept ist naturgemäß mit einer hohen Montagezeit verbunden, da für die Befestigung der einzelnen Modulbaugruppen in dem Montagerahmen viele manuelle Schraub- oder Vernietungsvorgänge erforderlich sind. Der wesentliche Nachteil der frontrahmenbasierten Systeme ist allerdings in der beschränkten Zugänglich- bzw. Montierbarkeit zu sehen, da die Trägereinheiten bei einem derartigen System in der Regel nur einseitig, also insbesondere ausschließlich von vorne und nicht alternativ auch von hinten mit Modulbaugruppen bestückt werden können.

Eine Alternative stellen schienenbasierte Systeme dar. Die Trägereinheit weist hierzu einzelne Schienenführungen und Rastpunkte für die Modulbaugruppen auf. Als Beispiel sei auf die EP 2 995 981 A2 verwiesen, in der verschiedene Schienenführungsarten vorgeschlagen werden. Ein schienenbasiertes System bietet bei der Montage und Verwendung der Trägeranordnung aufgrund der flexiblen Ausziehbarkeit der einzelnen Modulbaugruppen zwar Vorteile gegenüber einer unbeweglichen, frontrahmenbasierten Befestigung, erfordert aber gleichzeitig einen aufwändigen und komplexen Aufbau der Trägereinheit und der Modulbaugruppen.

Zum technologischen Hintergrund sei außerdem noch auf die US 2019/0121046 A1 verwiesen, die Kassetten für faseroptische Verteilertechnik betrifft, mit Federklemmen der Halterung, die so konstruiert ist, dass sie in einen quadratisch geformten Hohlraum in der Seite einer Kassette einrastet. Ferner sei auf die WO 2012/020225 A1 verwiesen, die eine Kabelträgeranordnung mit mindestens einem Kabelverbindungsmodul betrifft, die sich für den Einsatz in Netzwerkeinheiten, wie z. B. Patch-Einheiten eignet, und Mittel zum Verbinden, Organisieren und Tragen von Kabeln aufweist.

In Anbetracht des bekannten Stands der Technik besteht die Aufgabe der vorliegenden Erfindung darin, eine Modulbaugruppe für die faseroptische Verteilertechnik bereitzustellen, mit einer alternativen, vorzugsweise technisch einfach realisierbaren und für den Techniker komfortablen Montagemöglichkeit in einem Steckplatz einer korrespondierenden Trägereinheit.

Der vorliegenden Erfindung liegt auch die Aufgabe zugrunde, eine Trägereinheit für die faseroptische Verteilertechnik bereitzustellen, mit einer alternativen, vorzugsweise technisch einfach realisierbaren und für den Techniker komfortablen Montagemöglichkeit für eine korrespondierende Modulbaugruppe in einem Steckplatz der Trägereinheit.

Es ist auch eine Aufgabe der Erfindung, eine Trägeranordnung aus einer Trägereinheit und wenigstens einer Modulbaugruppe bereitzustellen, mit einer alternativen, vorzugsweise technisch einfach realisierbaren und für den Techniker komfortablen Montagemöglichkeit für die Modulbaugruppe in einem Steckplatz der Trägereinheit.

Die Aufgabe wird für die Modulbaugruppe durch die Merkmale des Anspruchs 1 oder 4 und betreffend die Trägereinheit durch Anspruch 7 oder 8 gelöst. Bezüglich der Trägeranordnung wird die Aufgabe durch die Merkmale des Anspruchs 13 gelöst.

Die abhängigen Ansprüche und die nachfolgend beschriebenen Merkmale betreffen vorteilhafte Ausführungsformen und Varianten der Erfindung.

Es ist eine Modulbaugruppe für die faseroptische Verteilertechnik vorgesehen, die entlang einer Montagerichtung in einem Steckplatz einer separaten Trägereinheit montierbar ist.

Die Modulbaugruppe weist einen Mittenbereich auf, durch den eine in Montagerichtung ausgerichtete Mittel- bzw. Mittenachse verläuft. Die Modulbaugruppe weist außerdem zwei Seitenbereiche auf, die sich jeweils an den Mittenbereich relativ zu der Mittenachse gegenüberliegend anschließen und jeweils wenigstens eine Seitenwand aufweisen.

Der Mittenbereich verläuft vorzugsweise symmetrisch in Bezug auf dessen Mittenachse. Bei dem Mittenbereich kann es sich beispielsweise um einen gedachten, rechteckigen Bereich der Modulbaugruppe handeln, der (in Bezug auf die Mittenachse) beidseitig einstückig oder gegebenenfalls auch mehrstückig in die Seitenbereiche übergeht. Die Gestaltung der Modulbaugruppe, also Mittenbereich und die beiden Seitenbereiche, kann bzw. können insgesamt symmetrisch entlang der Mittenachse ausgebildet sein. Es kann aber auch vorgesehen sein, dass lediglich der (gedachte) Mittenbereich symmetrisch verläuft und die Seitenbereiche eine Asymmetrie (in Bezug auf die Mittenachse) in die Modulbaugruppe einbringen. Vorzugsweise sind die Seitenwände symmetrisch um die Mittenachse angeordnet bzw. äquidistant zu der Mittenachse angeordnet.

Vorzugsweise handelt es sich bei der Mittenachse um eine Längsachse der Modulbaugruppe.

Erfindungsgemäß ist vorgesehen, dass wenigstens eine der Seitenwände zumindest abschnittsweise entlang der Mittenachse einen kurvigen und/oder mehrstufigen, den seitlichen Abstand zur Mittenachse verändernden Verlauf aufweist, so dass die wenigstens eine Seitenwand zumindest einen Vor- oder Rücksprung für eine formschlüssige Montage in dem Steckplatz der Trägereinheit ausbildet.

Es kann also zumindest ein kurviger und/oder mehrstufiger Vor- oder Rücksprung an den Seitenwänden entlang der Mittenachse ausgebildet sein, gegebenenfalls auch mehrere Vor- und/oder Rücksprünge. Die Vor- oder Rücksprünge können beispielsweise durch konvexe oder konkave Verläufe der Seitenwände gebildet werden. Auch komplexe Verläufe der Seitenwände sind möglich, beispielsweise wenn der Kurvenverlauf der Seitenwand mehrere Scheitelpunkte bzw. mehrere Radien aufweist.

Es kann vorgesehen sein, dass wenigstens eine der Seitenwände entlang wenigstens einer ihrer Erstreckungsrichtungen zumindest im Wesentlichen einer gedachten, gekrümmten Kurve folgt, deren Amplitude den Abstand der entsprechenden Seitenwand von der jeweils anderen Seitenwand bzw. von der Mittenachse beeinflusst.

Dadurch, dass die Seitenwände der Modulbaugruppe nicht quaderförmig bzw. linear verlaufend ausgebildet sind, sondern beispielsweise einem elliptischen oder sonstigen nicht geraden Verlauf folgen, kann sich die Modulbaugruppe für eine technisch einfach realisierbare, formschlüssige Befestigung in einem korrespondierenden Steckplatz eines entsprechenden Verbindungspartners eignen. Die vorgeschlagene Gestaltung der Modulbaugruppe in deren Seitenbereichen kann eine besonders einfache, schnelle bzw. komfortable Montagemöglichkeit für die Modulbaugruppe in einer Trägereinheit ermöglichen. Auf komplizierte Schienensysteme kann verzichtet werden.

In einer vorteilhaften Ausgestaltung der Erfindung kann vorgesehen sein, dass die Seitenwände einen im Wesentlichen flächigen Verlauf aufweisen, vorzugsweise jeweils einstückig ausgebildet sind.

Vorzugsweise weisen die Seitenwände eine flächige Außenmantelfläche auf. Die Seitenwände der Modulbaugruppe können beispielsweise eine konvex gewölbte Außenmantelfläche aufweisen. Auch eine konkav gewölbte Außenmantelfläche kann allerdings vorgesehen sein - oder sonstige Kurvenverläufe.

Ein flächiger Verlauf der Seitenwände ist technisch besonders einfach realisierbar. Insbesondere auf Stege, Schultern, Längsnuten, etc., die in der Regel beispielsweise für eine Schienenführung erforderlich sein können, kann verzichtet werden.

Die Seitenwände erstrecken sich vorzugsweise jeweils im Wesentlichen in zwei Erstreckungsrichtungen. Die erste Erstreckungsrichtung ist vorzugsweise eine Längserstreckung (insbesondere in Montagerichtung) und die zweite Erstreckungsrichtung ist vorzugsweise eine quer zu der Längserstreckung bzw. orthogonal zu der Längserstreckung oder Montagerichtung ausgerichtete Quererstreckung, insbesondere die Kürzere der beiden Quererstreckungen, also beispielsweise entsprechend der Bauhöhe der Modulbaugruppe.

Es kann vorgesehen sein, dass die Seitenwand den bezogen auf die Mittenachse abstandsverändernden Verlauf entlang der ersten Erstreckungsrichtung ausbildet, also entlang der Montagerichtung.

Es kann alternativ oder zusätzlich auch vorgesehen sein, dass die Seitenwand den bezogen auf die Mittenachse abstandsverändernden Verlauf entlang der zweiten Erstreckungsrichtung ausbildet, also quer zu der Montagerichtung.

In einer besonders vorteilhaften Weiterbildung der Erfindung kann allerdings vorgesehen sein, dass sich der seitliche Abstand zur Mittenachse der wenigstens einen Seitenwand entlang der Montagerichtung und außerdem auch quer zu der Montagerichtung verändert (also entlang der vorstehend genannten ersten Erstreckungsrichtung und der zweiten Erstreckungsrichtung).

Es kann beispielsweise vorgesehen sein, dass die Seitenwände der Modulbaugruppe jeweils in Montagerichtung als auch quer zu der Montagerichtung (entlang der Bauhöhe) konvex und ein korrespondierender Steckplatz eines Verbindungspartners (insbesondere einer nachfolgend noch beschriebenen Trägereinheit) komplementär, also in zwei korrespondierenden Erstreckungsrichtungen konkav geformt ist, so dass die Modulbaugruppe formschlüssig in dem Steckplatz montierbar ist.

Vorzugsweise folgen beide Seitenwände der Modulbaugruppe einer jeweilig gedachten, gekrümmten Kurve bzw. weisen den vorstehend genannten kurvigen und/oder mehrstufigen Verlauf auf. Im Rahmen der Erfindung kann es gegebenenfalls aber auch ausreichend sein, wenn lediglich eine der Seitenwände den kurvigen und/oder mehrstufigen Verlauf aufweist.

Insofern beide Seitenwände einen jeweiligen kurvigen bzw. mehrstufigen Verlauf aufweisen, verlaufen die Seitenwände vorzugsweise symmetrisch in Bezug auf die Mittenachse des Mittenbereichs, so dass der Verlauf der jeweiligen Seitenwand an der Mittenachse gespiegelt ist.

Gemäß einer Ausgestaltung der Erfindung kann vorgesehen sein, dass die Seitenwand der gekrümmten Kurve gleichmäßig, stufig, insbesondere mehrstufig, oder polygonal angenähert folgt.

Vorzugsweise entspricht der Verlauf der Seitenwand dem Verlauf der gedachten, gekrümmten Kurve. Der Verlauf der Seitenwand kann von dem Verlauf der gedachten, gekrümmten Kurve gegebenenfalls aber auch abweichen, beispielsweise wenn die Seitenwand einen mehrstufigen Verlauf aufweist. In diesem Fall weist die Seitenwand möglichst viele Berühr- und/oder Schnittpunkte mit der gedachten, gekrümmten Kurve auf. Es sind zumindest vier, weiter bevorzugt zumindest sechs, beispielsweise auch acht, zehn oder noch mehr Berührpunkte vorgesehen, wobei auch eine ungerade Anzahl Berührpunkte vorgesehen sein kann, also beispielsweise drei, fünf, sieben, neun oder noch mehr Berührpunkte.

Es kann ein beliebiges kurviges, stufiges und/oder polygonales Querschnittsprofil der Seitenwände vorgesehen sein.

Es kann vorgesehen sein, dass der zumindest eine Vor- oder Rücksprung in einem von den Endabschnitten der Seitenwände beabstandeten, mittleren Abschnitt ausgebildet ist.

Bei den Endabschnitten, zwischen denen sich die Seitenwände jeweils erstrecken, handelt es sich vorzugsweise um jeweilige Enden der Modulbaugruppe, gegebenenfalls aber auch um einen jeweiligen Abschnitt im Bereich des entsprechenden Endes.

Insbesondere kann vorgesehen sein, dass der zumindest eine Vor- oder Rücksprung bzw. der nachfolgend noch genannte Scheitel- oder Sattelpunkt mittig oder zumindest im Wesentlichen mittig zwischen den beiden Endabschnitten ausgebildet ist, also beispielsweise zumindest im mittleren Drittel der Seitenwand.

In einer besonders vorteilhaften Ausgestaltung der Erfindung kann vorgesehen sein, dass sich der Vor- oder Rücksprung (insbesondere genau ein Vor- oder Rücksprung) über die gesamte Seitenwand erstreckt, also insbesondere über die vollständige Erstreckung der Seitenwand zwischen den beiden Enden bzw. Endabschnitten. Auf diese Weise kann sich beispielsweise eine bauchig / elliptisch gewölbte Seitenwand (konvex oder konkav) ergeben.

Gemäß einer Weiterbildung der Erfindung kann vorgesehen sein, dass die wenigstens eine Seitenwand zur Veränderung des seitlichen Abstandes entlang der Mittenachse einen kontinuierlichen Verlauf aufweist.

Auch ein entlang der Mittenachse unterbrochener Verlauf der Seitenwand kann gegebenenfalls vorgesehen sein. Beispielsweise können mehrere Seitenwandsegmente vorgesehen sein, die gemeinsam die Seitenwand und jeweilige abschnittsweise kurvige und/oder mehrstufige Verläufe ausbilden.

In einer Ausgestaltung kann der Vor- oder Rücksprung durch wenigstens einen Scheitel- oder Sattelpunkt des kurvigen Verlaufs ausgebildet sein, vorzugsweise durch einen primären Scheitelpunkt einer globalen Extremstelle des kurvigen Verlaufs der Seitenwand.

In einer Weiterbildung der Erfindung kann vorgesehen sein, dass die wenigstens eine Seitenwand in einer zur Montagerichtung orthogonalen Richtung einen elliptischen Verlauf ausbildet, vorzugsweise einen konkaven oder konvexen Verlauf.

Es kann also insbesondere ein Verlauf der Seitenwände mit genau einem Scheitel- oder Sattelpunkt vorgesehen sein, insbesondere mit einem von den Endabschnitten der Seitenwände beabstandeten, vorzugsweise mittigen Scheitel- oder Sattelpunkt, um den Vor- oder Rücksprung auszubilden.

In einer Weiterbildung der Erfindung kann vorgesehen sein, dass wenigstens einer der Seitenbereiche elastisch ausgebildet ist. Beispielsweise können die Seitenwände elastisch ausgebildet sein (z. B. unter Verwendung eines Elastomers als Grundmaterial für die Seitenwand) oder eines oder mehrere elastische Elemente aufweisen.

Die Deformierbarkeit bzw. die Elastizität in den Seitenbereichen kann derart gewählt sein, dass für die Modulbaugruppe in einem korrespondierenden Steckplatz eines Verbindungspartners eine ausreichende Haltekraft bereitgestellt wird und/oder dass sich die Seitenbereiche während der Montage ausreichend reversibel verbiegen können, ohne eine (irreversible) plastische Verformung zu erfahren.

Die Bauhöhe der Seitenwände der Modulbaugruppe kann vorzugsweise auf ein bekanntes Standardmaß für faseroptische Modulbaugruppen ausgelegt sein (sogenannte "Höheneinheit", HE). Die Bauhöhe der Seitenwände kann grundsätzlich allerdings beliebig sein. Insofern vorstehend und nachstehend von einer "Höheneinheit" gesprochen wird, so handelt es sich dabei um eine für Elektronikgehäuse typischerweise verwendete, dem Fachmann geläufige und genormte Maßeinheit, die insbesondere bezogen auf Gerätegehäuse zum Einbau in 19-Zoll-Racks bzw. 19-Zoll-Verteilerrahmen Verwendung findet. Eine Höheneinheit entspricht 1¾ Zoll bzw. 44,45 Millimeter.

Die Modulbaugruppe, insbesondere die Seitenwände der Modulbaugruppe, können aus einem Kunststoff oder einem Metallwerkstoff ausgebildet sein. Auch Kombinationen aus Kunststoff oder Metall können gegebenenfalls vorgesehen sein. Gegebenenfalls können auch biokompatible Materialien vorgesehen sein, beispielsweise Biopolymere. Insbesondere können auch brandhemmende Materialien zum Einsatz kommen.

Die Modulbaugruppe kann ein Außengehäuse aufweisen, wobei die Seitenwände vorzugsweise einen Teil des Außengehäuses bilden. Das Außengehäuse der Modulbaugruppe kann rahmenartig ausgebildet sein, insbesondere entlang seines Umfangs vollständig geschlossen sein. Gegebenenfalls kann das Außengehäuse aber auch an einer oder mehreren Seiten geöffnet sein. Die beiden Seitenwände können vorzugsweise an ihren jeweiligen Enden über eine vorderseitige und/oder rückseitige Abschlussblende miteinander verbunden sein. Es kann aber auch vorgesehen sein, dass das Außengehäuse lediglich eine Bodenplatte und die beiden Seitenwände aufweist, die nur optional, aber nicht notwendigerweise, miteinander verbunden sind.

Die Modulbaugruppe weist vorzugsweise zumindest eine faseroptische Komponente auf oder bietet zumindest die Möglichkeit zur Aufnahme einer faseroptischen Komponente. Insbesondere kann der Mittenbereich die zumindest eine faseroptische Komponente aufnehmen.

Das Außengehäuse der Modulbaugruppe kann eine Bodenplatte und/oder eine Deckelplatte aufweisen, um die faseroptischen Komponenten der Modulbaugruppe hinreichend zu schützen.

Die Modulbaugruppe kann auch als "faseroptisches Modul" oder als "faseroptische Kassette" bezeichnet werden. Üblicherweise sind derartige Modulbaugruppen zur Aufnahme in einer Trägereinheit vorgesehen, wobei mehrere Modulbaugruppen in einer gemeinsamen Trägereinheit montiert werden können.

Die Modulbaugruppe kann eine vorderseitige Schnittstelle mit einem oder mehreren optischen Verbindern (z. B. Steckverbinder) aufweisen.

Die Modulbaugruppe kann eine rückseitige Schnittstelle mit einem oder mehreren zweiten optischen Verbindern (z. B. Steckverbinder) aufweisen.

Die Anzahl erster Verbinder der vorderseitigen Schnittstelle ist vorzugsweise größer als die Anzahl zweiter Verbinder der rückseitigen Schnittstelle. Innerhalb der Modulbaugruppe, insbesondere innerhalb des Außengehäuses, können Einzelverbindungen zwischen den beiden Schnittstellen verteilt sein.

Die Erfindung betrifft auch eine Trägereinheit für zumindest eine Modulbaugruppe für die faseroptische Verteilertechnik (insbesondere die vorstehend erwähnte Modulbaugruppe), aufweisend eine Trägerplatte welche wenigstens einen Steckplatz für jeweils zumindest eine Modulbaugruppe aufweist, der eine in einer Montagerichtung der Modulbaugruppe ausgerichtete Mittenachse aufweist.

Erfindungsgemäß weist die Trägereinheit jeweils eine mit der Trägerplatte verbundene Befestigungsvorrichtung zur formschlüssigen Befestigung der Modulbaugruppe in dem wenigstens einen Steckplatz auf. Die Befestigungsvorrichtung weist zwei Befestigungshalterungen auf, welche jeweils an einem relativ zu der Mittenachse seitlichen Ende des Steckplatzes ausgebildet sind. Jede der Befestigungshalterung weist jeweils eine Seitenwand auf, die den Steckplatz vorzugsweise seitlich begrenzen.

An dieser Stelle sei erwähnt, dass die Seitenwand bzw. Seitenwände der Trägereinheit im Rahmen der vorliegenden Beschreibung auch als "trägerseitige Seitenwände" und die Seitenwände der Modulbaugruppe als "modulseitige Seitenwände" bezeichnet werden können. Grundsätzlich können Merkmale der trägerseitigen Seitenwände und der modulseitigen Seitenwände austauschbar sein, wenn nichts Gegenteiliges erwähnt und dies technisch nicht ausgeschlossen ist. Dies gilt beispielsweise für die vorstehend und nachfolgend beschriebenen abstandsveränderlichen Verläufe bezogen auf die Mittenachse (z. B. konvex vs. konkav), die Elastizität der Seitenwände oder das Material der Seitenwände. Insofern vorstehend und nachfolgend nur von einer "Seitenwand" gesprochen wird, so können sich die Angaben auf eine modulseitige Seitenwand und/oder eine trägerseitige Seitenwand beziehen.

Erfindungsgemäß ist vorgesehen, dass wenigstens eine der Seitenwände der Trägereinheit zumindest abschnittsweise entlang der Mittenachse einen kurvigen und/oder mehrstufigen, den seitlichen Abstand zur Mittenachse verändernden Verlauf aufweist, so dass die wenigstens eine Seitenwand zumindest einen Vor- oder Rücksprung für die formschlüssige Montage der Modulbaugruppe in dem Steckplatz ausbildet. Der zumindest eine Vor- oder Rücksprung ist in einem von den Endabschnitten der Seitenwände beabstandeten, mittleren Abschnitt ausgebildet.

Vorzugsweise ist der Steckplatz zwischen den trägerseitigen Seitenwände ausgebildet, wobei die Seitenwände horizontal in Bezug auf die Trägerplatte orientiert sind, um einen unterseitig durch die Trägerplatte begrenzten jeweiligen horizontalen Steckplatz auszubilden (bevorzugt). Die Mittenachse des Steckplatzes kann somit parallel zu der Trägerplatte bzw. deren Hauptfläche verlaufen.

Grundsätzlich kann allerdings auch vorgesehen sein, dass der Steckplatz in Bezug auf die Trägerplatte vertikal orientiert ist oder schräg, entlang eines beliebigen Winkels zu der Trägerplatte verläuft, um eine Aufnahme der Modulbaugruppen orthogonal in Richtung auf die Trägerplatte oder schräg in Richtung auf die Trägerplatte zu ermöglichen. Die Mittenachse des Steckplatzes kann somit winklig bis orthogonal zu der Trägerplatte bzw. deren Hauptfläche verlaufen (z. B. mit einem Winkel von bis zu etwa 5°, 10°, 15°, 20°, 25°, 30°, 35°, 40°, 45°, 50°, 55°, 60°, 65°, 70°, 75°, 80°, 85°, 90° oder mehr).

An dieser Stelle sei erwähnt, dass auch die Deckelplatte und/oder Bodenplatte gegebenenfalls Federelemente aufweisen, also einen Teil des Steckplatzes der Trägereinheit bilden können. In diesem Fall können die Deckelplatte und/oder Bodenplatte im Rahmen der vorliegenden Beschreibung auch als "Seitenwände" verstanden werden.

Die Trägereinheit weist vorzugsweise zumindest eine faseroptische Komponente auf oder bietet zumindest die Möglichkeit zur Aufnahme einer faseroptischen Komponente.

Die Trägereinheit dient vorzugsweise zur Aufnahme mehrerer Modulbaugruppen, beispielsweise zur Aufnahme von zwei, drei, vier, fünf, sechs, sieben, acht, neun, zehn oder noch mehr Modulbaugruppen.

Die Trägereinheit kann beispielsweise als Einschubfach ("Tray") eines Verteilerrahmens oder generell als Rangierfeld ("Patchfeld" bzw. "Patch Panel") ausgebildet sein. Optional kann die Trägereinheit, insbesondere wenn diese als Einschubfach ausgebildet ist, einen Montagerahmen aufweisen, der optional Komponenten einer Schienenführung an den Außenseiten aufweist. Die Trägereinheit kann neben der Trägerplatte optional auch eine Deckelplatte aufweisen, um die in der Trägereinheit aufgenommenen Modulbaugruppen hinreichend zu schützen.

In der Trägerplatte der Trägereinheit können vorzugsweise Öffnungen zur Durchführung von faseroptischen Leitungen ausgebildet sein. Ferner kann vorgesehen sein, dass die Trägereinheit rückseitig und/oder vorderseitig geöffnet ist, um eine vorteilhafte Zugänglichkeit zu der vorderseitigen Schnittstelle und/oder rückseitigen Schnittstelle der Modulbaugruppen zu ermöglichen. Optional kann eine vorderseitige und/oder rückseitige Abdeckplatte oder Abschlussblende vorgesehen sein, beispielsweise eine schließbare (z. B. schwenkbare) Abdeckplatte, um die Zugänglichkeit zu der vorderseitigen und/oder rückseitigen Schnittstelle der auf der Trägereinheit befestigten Modulbaugruppen wahlweise einzuschränken.

In einer vorteilhaften Weiterbildung der Erfindung kann vorgesehen sein, dass die Trägerplatte eine Mehrzahl nebeneinander angeordneter Steckplätze aufweist, vorzugsweise in äquidistanter Beabstandung und/oder mit jeweils identischer Steckplatzbreite.

Alternativ zu einer äquidistanten Anordnung der Steckplätze auf der Trägerplatte kann eine beliebige, unregelmäßige bzw. flexible Beabstandung und jeweilige Steckplatzbreite der Steckplätze vorgesehen sein. Es kann auch vorgesehen sein, dass die Steckplatzbreite der Steckplätze und/oder die Beabstandung einzelner Steckplätze bedarfsweise einstellbar ist, beispielweise indem einzelne trägerseitige Seitenwände auf der Trägerplatte versetzt werden. Auf diese Weise können unterschiedliche Bauformen faseroptischer Modulbaugruppen auf einer gemeinsamen Trägereinheit modular kombinierbar sein. Die mehreren Steckplätze können also zur Aufnahme von jeweils verschieden breiten Modulbaugruppen ausgebildet bzw. auf der Trägereinheit angeordnet sein.

Es kann vorzugsweise vorgesehen sein, dass jeweils zwei unmittelbar benachbarte Steckplätze eine gemeinsame Seitenwand aufweisen. Alternativ können die benachbarten Steckplätze aber auch separat voneinander ausgebildet sein, wobei also jeder Steckplatz eigene Seitenwände aufweist.

In einer Weiterbildung der Erfindung kann vorgesehen sein, dass der Steckplatz ausgebildet ist, eine Montage der Modulbaugruppe in horizontaler Richtung entlang der Trägerplatte zu ermöglichen.

Der Einschub oder die Entnahme eines Moduls kann vorzugsweise von der Vorder- wie auch der Rückseite eines Steckplatzes auf die gleiche Art und Weise erfolgen.

Alternativ oder - bevorzugt - zusätzlich kann vorgesehen sein, dass der Steckplatz ausgebildet ist, eine Montage der Modulbaugruppe in vertikaler Richtung, in Richtung auf die Trägerplatte zu ermöglichen.

Vorzugsweise umschließen die Seitenwände der Trägereinheit die Seitenwände der Modulbaugruppe sowohl in der Draufsicht als auch in der Frontalansicht, weshalb eine Fixierung der Modulbaugruppe sowohl in Montagerichtung wie auch in einer hierzu orthogonal orientierten, vertikalen Richtung stattfinden kann.

Für eine Montage der Modulbaugruppe in horizontaler Richtung, also entlang der Trägerplatte, kann der Steckplatz bzw. die den Steckplatz ausbildende Trägereinheit vorzugsweise an zumindest einem, insbesondere an beiden Endabschnitten, geöffnet sein. Vorzugsweise umfasst der Steckplatz lediglich die beiden Seitenwände. Auf diese Weise ist ein vorderseitiges und/oder rückseitiges Einschieben der Modulbaugruppe möglich. Auch ein einseitiges Einschieben (beispielsweise nur von vorne oder nur von hinten) kann vorgesehen sein, beispielsweise wenn der Steckplatz U-förmig ausgebildet ist.

Um ein Einfügen in vertikaler Richtung, also in Richtung auf die Trägerplatte, zu ermöglichen, kann vorgesehen sein, dass der Steckplatz auf der von der Trägerplatte abgewandten Seite geöffnet ist. Auf diese Weise kann die Modulbaugruppe "von oben" in den Steckplatz einfügbar sein.

Vorzugsweise erfolgt eine formschlüssige Fixierung der Modulbaugruppen nicht nur horizontal, sondern auch vertikal zur Montagerichtung. Insbesondere (aber nicht ausschließlich) in diesem Fall kann auf eine Deckelplatte der Trägereinheit verzichtet werden, was für eine besonders dichte, gestapelte Anordnung von Trägereinheiten von Vorteil sein kann, da die Möglichkeit der Einsparung der einzelnen Deckelplatten die Minimierung der Bauhöhe einzelner Trägereinheiten begünstigt.

Erfindungsgemäß ist vorgesehen, dass wenigstens eine der Befestigungshalterungen elastisch ausgebildet ist.

Vorzugsweise weist wenigstens eine der Befestigungshalterungen zumindest ein entlang der entsprechenden Seitenwand verlaufendes Federelement auf oder ist zumindest abschnittsweise elastisch ausgebildet (z. B. unter Verwendung eines Elastomers als Grundmaterial). Besonders bevorzugt ist die Seitenwand durch wenigstens eine Blattfeder ausgebildet oder weist wenigstens eine Blattfeder auf.

Das Federelement wirkt vorzugsweise in Richtung auf die jeweils gegenüberliegende Seitenwand elastisch.

Die Montage und/oder Entnahme der Modulbaugruppe in bzw. aus dem korrespondierenden Steckplatz der Trägereinheit kann durch Überwindung der Haltekraft der Federelemente bzw. Blattfedern erfolgen, indem eine entsprechend starke Druck- oder Zugkraft aufgewandt wird.

Die Einbeziehung einer elastischen Komponente in die Befestigungshalterung kann von Vorteil sein, um eine vorteilhafte Möglichkeit zum Einfügen der Modulbaugruppe bereitzustellen und um optional auch im befestigten Zustand einen Kraftschluss zwischen Steckplatz und Modulbaugruppe oder zumindest eine Rückhaltekraft auf die Modulbaugruppe aufzubringen. Dabei kann es grundsätzlich bereits ausreichend sein, wenn wahlweise die Seitenbereiche der Modulbaugruppe oder die Befestigungshalterungen der Trägereinheit elastisch ausgebildet sind. Gegebenenfalls können allerdings auch beide Verbindungspartner oder keiner der Verbindungspartner elastisch ausgebildet sein bzw. ein Federelement aufweisen.

Ein besonderer Vorteil bei der Montage ist bei Einbeziehung einer elastischen Komponente in die Befestigungshalterung auch darin zu sehen, dass ein Einführen der Modulbaugruppe in den Steckplatz dann auch winklig bzw. schräg erfolgen kann. Die Zentrierung der Modulbaugruppe innerhalb des Steckplatzes kann während des Einführens selbstständig durch die Federkräfte erfolgen. Ein Monteur muss daher keine besondere Sorgfalt walten lassen und auch die Gefahr einer Beschädigung der Modulbaugruppe oder der Trägereinheit können reduziert sein. Ferner kann gegebenenfalls auf einen Einführhilfe, wie eine trichterförmige Gehäusegestaltung verzichtet werden, was eine kompaktere Bauweise ermöglichen kann.

In einer Weiterbildung der Erfindung kann vorgesehen sein, dass das Federelement, insbesondere die Blattfeder, aus mehreren entlang der Seitenwand angeordneten Einzelfedern zusammengesetzt ist.

Die Befestigungshalterung, beispielsweise die jeweilige Seitenwand des Steckplatzes, kann also auch durch mehrere einzelne Federelemente ausgebildet sein, die vertikal und/oder horizontal nebeneinander, gegebenenfalls voneinander beabstandet, angeordnet sind.

Der Kontaktdruck, mit dem die Befestigungshalterungen des Steckplatzes auf die Seitenwände der Modulbaugruppe wirken, kann vorzugsweise von einem Fachmann anwendungsbedingt optimiert werden. Die realisierbare Federkraft der Federelemente bzw. der Federweg der einzelnen Federelemente kann somit variierbar sein, beispielsweise durch Auswahl des Blattfedermaterials, der Blattfederdicke und/oder der Blattfederlänge.

Um neben einer formschlüssigen Befestigungsmöglichkeit optional auch die Möglichkeit eines erhöhten Reibschlusses zwischen den miteinander verbundenen Verbindungspartnern zu ermöglichen, kann die Außenfläche der Seitenwände optional eine entsprechende Oberflächenstruktur, beispielsweise eine Riffelung oder Beschichtung, aufweisen.

Der Steckplatz kann entlang seines Umfangs vollständig geschlossen, gegebenenfalls aber auch an einer oder mehreren Seiten geöffnet sein. Der Steckplatz kann somit beispielsweise U-förmig ausgebildet sein. Es kann insbesondere aber vorgesehen sein, dass der Steckplatz lediglich die beiden Seitenwände aufweist, die optional, aber nicht notwendigerweise, miteinander verbunden sind.

In einer vorteilhaften Weiterbildung der Erfindung kann vorgesehen sein, dass die Befestigungsvorrichtung entweder einteilig mit der Trägerplatte ausgebildet ist (z. B. als Stanz-Biegeteil oder Spritzgussteil) oder an der Trägerplatte befestigt ist (kraft-, form- und/oder stoffschlüssig).

Insofern der Steckplatz, insbesondere die Seitenwände des Steckplatzes, beispielsweise die Federelemente, einteilig mit der Trägerplatte ausgebildet sein sollen, kann die Trägerplatte, ggf. die gesamte Trägereinheit, vorzugsweise als Spritzgussteil oder Stanz-Biegeteil hergestellt sein.

Insofern der Steckplatz bzw. die Seitenwände des Steckplatzes mehrstückig mit der Trägerplatte ausgebildet sind, können diese beispielsweise über Stifte, Nieten oder Schrauben befestigbar sein. Auch eine Presspassung oder stoffschlüssige Verbindung, wie eine Schweißverbindung, können vorgesehen sein.

Vorzugsweise sind die Seitenwände der Steckplätze einzeln auf der Trägerplatte verrastbar, verpressbar und/oder verschraubbar. Die Trägerplatte kann insbesondere ein Verbindungsraster aufweisen, so dass die Seitenwände von einem Techniker an definierten Positionen montierbar sein können.

Insbesondere wenn mehrere Steckplätze auf einer gemeinsamen Trägereinheit angeordnet sind, können diese auch unterschiedliche Bauhöhen aufweisen, um unterschiedlich hohe faseroptische Modulbaugruppen aufzunehmen.

An dieser Stelle sei erwähnt, dass ein Steckplatz der Trägereinheit auch zur Aufnahme mehrerer faseroptischer Modulbaugruppen ausgebildet sein kann (in horizontaler Richtung bzw. in Längsachsrichtung, also "hintereinander" oder als Stapel, also "aufeinander"). In diesem Fall ist vorzugsweise für jede Modulbaugruppe zumindest ein separates Federelement vorgesehen. Vorzugsweise ist ein jeweiliger Steckplatz allerdings zur Aufnahme von genau einer Modulbaugruppe vorgesehen.

Die Erfindung betrifft auch eine Trägeranordnung, aufweisend eine Trägereinheit gemäß den vorstehenden oder nachfolgenden Ausführungen, sowie zumindest eine in einem der Steckplätze montierte Modulbaugruppe, insbesondere gemäß den vorstehenden und nachfolgenden Ausführungen.

Auf die vorgeschlagene Weise kann eine faseroptische Modulbaugruppe lösbar auf einer Trägereinheit (z. B. auf einem Tray oder einem faseroptischen Verteilgehäuse) fixiert und zentriert werden.

Insgesamt ist die Modulbaugruppe bzw. deren Außengehäuse vorzugsweise derart gestaltet, dass diese sowohl in der Frontalansicht als auch in der Draufsicht jeweils eine gekrümmte, insbesondere elliptische, bevorzugt eine konvexe Form besitzt. Auf der Trägerplatte der faseroptischen Trägereinheit befinden sich vorzugsweise in diskreter Anordnung jeweils gegenüberliegende elastische Seitenwände jeweiliger Steckplätze, wobei insbesondere zwei Blattfederpaare pro Steckplatz vorgesehen sind. Die Steckplätze entsprechen in ihrer Form vorzugsweise dem Negativ korrespondierender Seitenwände der Modulbaugruppe.

In einer besonders bevorzugten Variante können durch die gekrümmte, vorzugsweise in Richtung Vorder- und Rückseite verjüngende Form der Modulbaugruppe die Blattfedern des Steckplatzes, die in Richtung auf die Innenseite der Steckplätze vorgespannt sind, beiseite gedrückt werden, bis sich der Scheitelpunkt des elliptischen Modulgrundrisses im Mittelpunkt der Blattfederpaare befindet. Die Blattfedern greifen an diesem Punkt formschlüssig um die Seitenwände der Modulbaugruppe und fixieren die Modulbaugruppe mittels eines, durch die Vorspannung der Blattfedern, definierten Anpressdrucks.

Insbesondere durch die vorgeschlagene Kombination aus Formschluss und Kraftschluss kann auf eine aufwendige Führung, wie beispielsweise eine Schienenführung, für die Montage einer Modulbaugruppe auf der Trägereinheit verzichtet werden. Auf vorteilhafte Weise kann zwischen Trägereinheit und Modulbaugruppe eine reine Einspannfunktion bereitgestellt werden.

Erfindungsgemäß ist das Einfügen und Entfernen der einzelnen faseroptischen Modulbaugruppen einfach, also insbesondere komfortabel und zeitsparend, und außerdem auch prozesssicher durchführbar. Für die Fixierung bzw. Befestigung einer Modulbaugruppe in der Trägereinheit werden in einer minimalistischen Variante der Erfindung neben den jeweiligen gekrümmten Seitenwänden vorzugsweise keine zusätzlichen Komponenten benötigt. Insbesondere auf eine aufwändige Schienenführung oder ein Verschrauben der Modulbaugruppe in der Trägereinheit kann verzichtet werden.

In einer vorteilhaften Weiterbildung der Erfindung kann vorgesehen sein, dass die Seitenwände der Modulbaugruppe zumindest im Wesentlichen eine komplementäre Form der Seitenwand der jeweils zugeordneten Befestigungshalterung aufweisen, so dass die Modulbaugruppe in ihrem montierten Zustand formschlüssig innerhalb der Befestigungsvorrichtung aufgenommen ist.

Der Steckplatz kann insbesondere eine negative Form der Modulbaugruppe aufweisen - oder umgekehrt. Insbesondere kommt es allerdings nicht auf eine vollständig komplementäre Form an - gegebenenfalls kann bereits eine im Wesentlichen komplementäre Form zwischen Steckplatz und Modulbaugruppe ausreichend sein, um eine stabile formschlüssige Montagemöglichkeit zu bieten.

Es kann insbesondere vorgesehen sein, dass die gekrümmte Kurve der Seitenwände der Modulbaugruppe konvex und die gekrümmte Kurve der Seitenwände des Steckplatzes konkav verläuft. Eine konvexe Form der Modulbaugruppe und eine konkave Ausbildung des Steckplatzes kann technisch besonders einfach umsetzbar sein. Gegebenenfalls kann allerdings auch die Modulbaugruppe konkav und der Steckplatz der Trägereinheit konvex ausgebildet sein.

Im Falle von konvexen Seitenwänden handelt es sich bei der globalen Extremstelle des primären Scheitelpunkts vorzugsweise um ein globales Maximum, im Falle der konkaven Seitenwände hingegen um ein globales Minimum der gekrümmten Kurve.

Vorzugsweise ist ein zumindest annähernd elliptischer oder vollständig elliptischer Verlauf der Seitenwände vorgesehen.

In einer Weiterbildung der Erfindung kann vorgesehen sein, dass entweder der Seitenbereich der Modulbaugruppe oder die dem Seitenbereich zugeordnete Befestigungshalterung der Befestigungsvorrichtung elastisch ausgebildet ist.

Insbesondere ist es also nicht unbedingt erforderlich, dass die Seitenwände der Modulbaugruppe und die Befestigungshalterung jeweils elastisch ausgebildet sind.

Gemäß einer Weiterbildung der Erfindung kann vorgesehen sein, dass die Modulbaugruppe ein Rastmittel und die Befestigungsvorrichtung der Trägereinheit ein Gegenrastmittel aufweist, um die Modulbaugruppe innerhalb der Befestigungsvorrichtung in zumindest einer Einschubposition lösbar zu verrasten.

Bei dem Rastmittel bzw. Gegenrastmittel kann es sich insbesondere um eine Kombination aus Vertiefung einerseits und Erhebung andererseits handeln. Bei der Vertiefung kann es sich um eine Nut oder einen Rücksprung handeln. Bei der Erhöhung kann es sich beispielsweise um einen Stift, Bolzen oder Steg handeln. Vorzugsweise kann das Rastmittel und/oder Gegenrastmittel an einem federelastischen Element angeordnet sein, wie einem Rasthebel.

Grundsätzlich können Modulbaugruppe und Steckplatz auch mehrere Rastmittel bzw. Gegenrastmittel aufweisen, um eine lösbare Verrastung in mehreren Einschubpositionen zu ermöglichen.

Vorzugsweise ist eine Verrastung zumindest in der vollständig eingeschobenen bzw. montierten Position der Modulbaugruppe innerhalb des Steckplatzes vorgesehen, gegebenenfalls aber auch in einer oder mehreren teilweise eingeschobenen Zwischenpositionen.

In einer besonders vorteilhaften Ausgestaltung der Rastverbindung kann vorgesehen sein, dass das Rastmittel der Modulbaugruppe und das Gegenrastmittel der Trägereinheit jeweils zumindest im Wesentlichen mittig zwischen den beiden Endabschnitten ausgebildet ist, beispielsweise an dem globalen Scheitel- oder Sattelpunkt der Seitenwände. Es kann vorteilhaft sein, im Bereich der Rastverbindung nur einen möglichst geringen Federweg vorzusehen, um die Rastverbindung in einem möglichst starren Bereich anzuordnen, da dann die erforderliche Verriegelungskraft und Entriegelungskraft unabhängig von der Federkraft und dem Federweg ausgelegt werden kann.

Optional kann zwischen Modulbaugruppe und Steckplatz bzw. Trägereinheit ein Endanschlag für die Modulbaugruppe vorgesehen sein, so dass die Modulbaugruppe nicht über eine bestimmte Position hinaus weiter in den Steckplatz einschiebbar ist, also beispielsweise auch nicht wieder rückseitig aus dem Steckplatz herausgeschoben werden kann.

Durch eine spezifische Anpassung der Seitenwände der Modulbaugruppe und des Steckplatzes, insbesondere durch Anpassung der Federelemente, kann gegebenenfalls auch eine Einzugsautomatik bereitgestellt werden. Die Modulbaugruppe kann also auch automatisch in die Befestigungsposition in dem Steckplatz hineingezogen werden.

Merkmale, die im Zusammenhang mit einem der Gegenstände der Erfindung, namentlich gegeben durch die Modulbaugruppe, die Trägereinheit und die Trägeranordnung, beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind.

In den Figuren sind funktionsgleiche Elemente mit denselben Bezugszeichen versehen. Es zeigen schematisch:
- Figur 1: eine Modulbaugruppe zur Montage in einer Trägereinheit für die faseroptische Verteilertechnik gemäß einem Ausführungsbeispiel der Erfindung, in einer perspektivischen Darstellung;
- Figur 2: die Modulbaugruppe der Figur 1 in einer Draufsicht;
- Figur 3: die Modulbaugruppe der Figur 1 in einer Vorderansicht auf die vorderseitige Schnittstelle;
- Figur 4: eine Trägereinheit für mehrere Modulbaugruppen für die faseroptische Verteilertechnik, mit mehreren Steckplätzen gemäß einem Ausführungsbeispiel der Erfindung, in einer perspektivischen Darstellung;
- Figur 5: die Trägereinheit der Figur 4 in einer Draufsicht;
- Figur 6: die Trägereinheit der Figur 4 in einer Vorderansicht auf die vorderseitige Schnittstelle;
- Figur 7: eine Trägeranordnung aus einer Trägereinheit und mehreren Modulbaugruppen, in einer perspektivischen Darstellung;
- Figur 8: ein Außengehäuse einer Modulbaugruppe gemäß einem weiteren Ausführungsbeispiel der Erfindung, mit einem mehrstufigen Verlauf der Seitenwände, in einer Draufsicht;
- Figur 9: ein Außengehäuse einer Modulbaugruppe gemäß einem weiteren Ausführungsbeispiel der Erfindung, mit einem polygonalen, wellenförmigen Kurvenverlauf der Seitenwände, in einer Draufsicht;
- Figur 10: ein Außengehäuse einer Modulbaugruppe gemäß einem weiteren Ausführungsbeispiel der Erfindung, mit einem konkaven Verlauf der Seitenwände, in einer Draufsicht;
- Figur 11: ein Außengehäuse einer Modulbaugruppe gemäß einem weiteren Ausführungsbeispiel der Erfindung, mit einer zentralen Anordnung von Seitenwandsegmenten, in einer Draufsicht;
- Figur 12: ein Außengehäuse einer Modulbaugruppe gemäß einem weiteren Ausführungsbeispiel der Erfindung, mit unterschiedlich ausgestalteten Seitenwänden, wobei eine der Seitenwände ein elastisches Federelement aufweist, in einer Draufsicht; und
- Figur 13: eine zwischen zwei Steckplätzen einer Trägereinheit angeordnete Befestigungshalterung mit einem Zusatzfederelement zur Erhöhung der Federkraft.

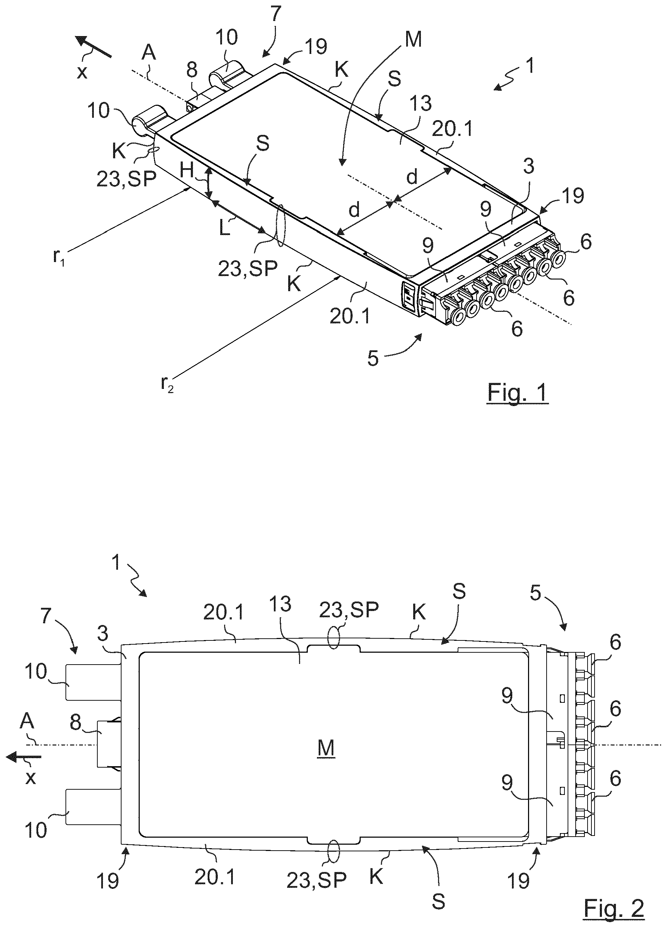

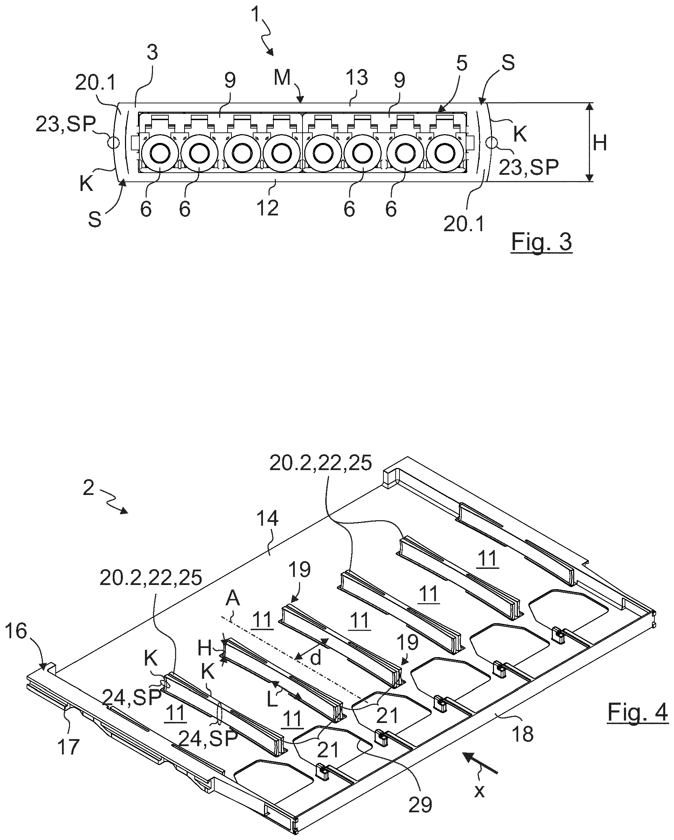

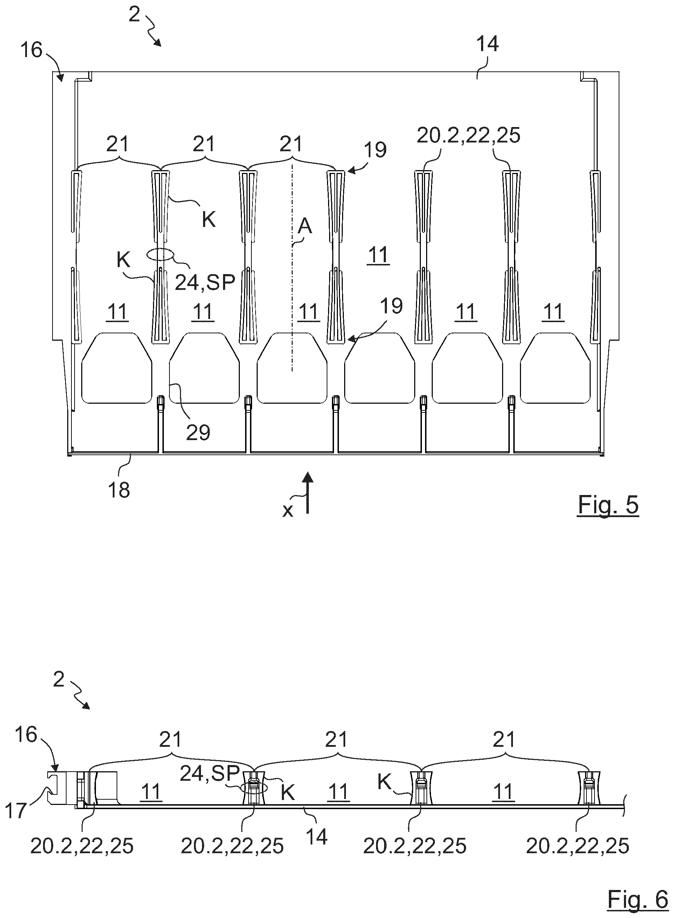

In den Figuren 1 bis 3 ist ein Ausführungsbeispiel einer erfindungsgemäßen Modulbaugruppe 1 in verschiedenen Ansichten gezeigt. Die Modulbaugruppe 1 ist zur Montage in einer Trägereinheit 2 für die faseroptische Verteilertechnik vorgesehen, die beispielhaft in den Figuren 4 bis 7 gezeigt ist. Die Modulbaugruppe 1 weist ein Außengehäuse 3 für die Befestigung in der Trägereinheit 2 auf.

Die Modulbaugruppe 1 weist eine vorderseitige Schnittstelle 5 mit mehreren ersten optischen Verbindern 6 sowie eine rückseitige Schnittstelle 7 mit einem zweiten optischen Verbinder 8 auf. Die ersten Verbinder 6 können einzeln oder innerhalb von Verbindermodulen 9 gruppiert sein, wie dargestellt. An der rückseitigen Schnittstelle 7 sind optional außerdem Betätigungselemente 10 angeordnet, um dem Techniker im Rahmen der Montage die Handhabung der Modulbaugruppe 1 zu erleichtern.

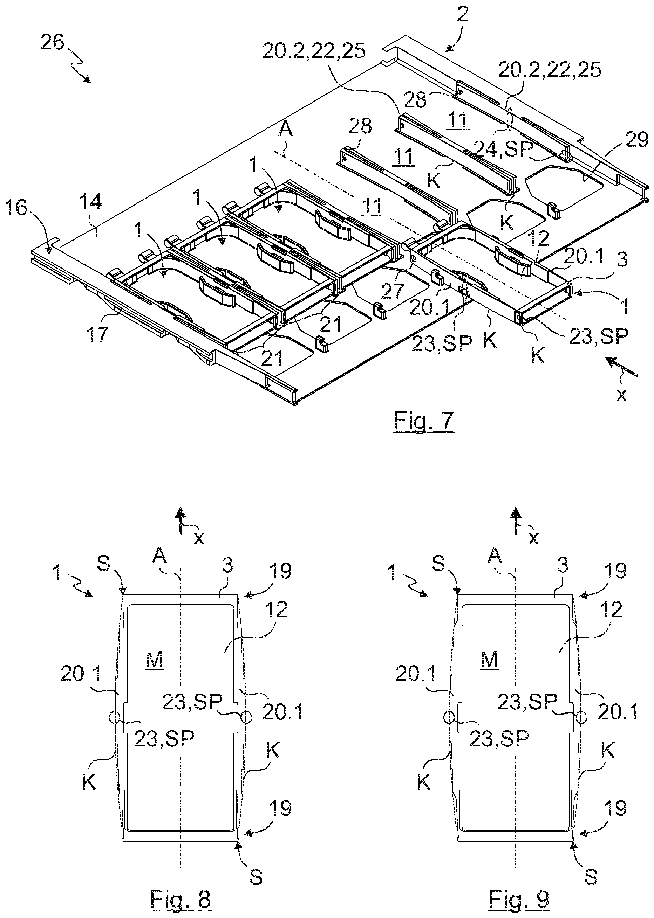

Das Außengehäuse 3 der Modulbaugruppe 1 ist ausgebildet, um in einem Steckplatz 11 (vgl. beispielsweise die Figuren 4 und 7) der Trägereinheit 2 montierbar zu sein. Das Außengehäuse 3 weist eine Bodenplatte 12 und optional eine Deckelplatte 13 auf, um die faseroptischen Komponenten (nicht dargestellt) innerhalb der Modulbaugruppe 1 zu schützen.

Die Trägereinheit 2, die beispielhaft in den Figuren 4 bis 7 dargestellt ist, weist eine Trägerplatte 14 und mehrere Steckplätze 11 zur Montage mehrerer Modulbaugruppen 1 auf.

In den Ausführungsbeispielen ist die Trägerplatte 14 beispielhaft als Einschubfach ("Tray") ausgebildet und weist einen Montagerahmen 16 auf, der außenwandseitig ein Schienenführungssystem 17 umfasst. Die Trägereinheit 2 ist rückseitig und vorderseitig zugänglich, wobei beispielsweise auch eine bedarfsweise Abdeckung der Vorder- und/oder Rückseite vorgesehen sein kann. Beispielhaft ist in Figur 4 eine schwenkbare Abdeckung 18 für die vordere Schnittstelle der Trägereinheit 2 dargestellt.

Das Außengehäuse 3 der Modulbaugruppe 1 weist jeweils zwei Endabschnitte 19 und zwei zwischen den beiden Endabschnitten 19 an gegenüberliegenden Seiten verlaufende Seitenwände 20.1 auf. Die Seitenwände 20.1 der Modulbaugruppe 1 sind jeweils einem Seitenbereich S zugeordnet, wobei sich die Seitenbereiche S jeweils an einen zwischen den beiden Seitenbereichen S angeordneten Mittenbereich M seitlich anschließen. Der Mittenbereich M dient vorzugsweise der Aufnahme der faseroptischen Komponenten und kann grundsätzlich ein vorzugsweise symmetrischer, gedachter mittlerer Abschnitt der Modulbaugruppe 1 sein. Durch den Mittenbereich M verläuft eine in Montagerichtung x ausgerichtete Mittenachse A, bei der es sich vorzugsweise um eine Längsachse der Modulbaugruppe 1 handelt.

Die Steckplätze 11 der Trägereinheit 2 weisen jeweils zwei Endabschnitte 19 und zwei zwischen den beiden Endabschnitten 19 an gegenüberliegenden Seiten verlaufende Seitenwände 20.2 auf. Durch den Steckplatz 11 verläuft eine in Montagerichtung x ausgerichtete Mittenachse A. Die Trägereinheit 2 weist außerdem jeweils eine mit der Trägerplatte 14 verbundene Befestigungsvorrichtung 21 zur formschlüssigen Befestigung der Modulbaugruppe 1 in dem wenigstens einen Steckplatz 11 auf. Die Befestigungsvorrichtungen 21 weisen jeweils zwei Befestigungshalterungen 22 auf, denen die jeweils in den Steckplatz 11 gerichtete Seitenwand 20.2 zugeordnet ist.

Die Befestigungshalterungen 22 bzw. die trägerseitigen Seitenwände 20.2 sind in den Ausführungsbeispielen jeweils mehrteilig mit der Trägerplatte 14 ausgebildet und auf der Trägerplatte 14 befestigt, beispielsweise verrastet. Grundsätzlich kann allerdings auch eine einstückige Variante vorgesehen sein.

Wenigstens eine der Seitenwände 20.1, 20.2, in den Ausführungsbeispielen jeweils beide Seitenwände 20.1, 20.2, weisen zumindest abschnittsweise entlang der Mittenachse A einen kurvigen und/oder mehrstufigen, den seitlichen Abstand d zur Mittenachse A verändernden Verlauf auf, so dass die wenigstens eine Seitenwand 20.1, 20.2 zumindest einen Vorsprung 23 oder Rücksprung 24 für eine formschlüssige Montage ausbildet.

Die Seitenwände 20.1, 20.2 folgen daher entlang wenigstens einer Erstreckungsrichtung L, H (vgl. Figuren 1 und 4) vorzugsweise zumindest im Wesentlichen einer gedachten, gekrümmten Kurve K (vgl. beispielsweise Figur 8). Die Amplitude der gekrümmten Kurve K beeinflusst jeweils den Abstand d (vgl. Figuren 1 und 4) der entsprechenden Seitenwand 20.1, 20.2 von der Mittenachse A. Zwischen den Endabschnitten 19 der Seitenwände 20.1, 20.2 kann ein primärer Scheitelpunkt SP einer globalen Extremstelle der gekrümmten Kurve K ausgebildet sein.

Auch wenn in dem Ausführungsbeispiel der Figuren 1 bis 7 der primäre Scheitelpunkt SP bzw. die globale Extremstelle der gekrümmten Kurve K im Wesentlichen mittig zwischen den beiden Endabschnitten 19 ausgebildet ist, so ist dies nicht zwingend erforderlich. Grundsätzlich kann ein beliebiger Kurvenverlauf der Seitenwände 20.1, 20.2 vorgesehen sein, insbesondere auch ein Verlauf mit mehreren lokalen Extremstellen bzw. mit mehreren Radien r_{1,2}. Beispielsweise sind auch zur Ausbildung des Verlaufs der Seitenwände 20.1, 20.2 gemäß dem Ausführungsbeispiel der Figuren 1 bis 7 verschiedene Radien r_{1,2} vorgesehen (vgl. Figur 1).

In den Ausführungsbeispielen weisen die Seitenwände 20.1, 20.2 einen im Wesentlichen flächigen Verlauf auf. Die Erstreckungsrichtungen, entlang denen die Seitenwand 20.1, 20.2 der gekrümmten Kurve K folgt, sind in den Ausführungsbeispielen eine Längserstreckung L der Seitenwände 20.1, 20.2 zwischen den beiden Endabschnitten 19 und eine Erstreckung in Richtung einer Bauhöhe H der Modulbaugruppe 1 (vgl. insbesondere Figur 3).

Die Befestigungshalterungen 22 bzw. die Seitenwände 20.2 der Trägereinheit 2 (vgl. Figuren 4 bis 7) weisen jeweilige elastisch wirkende Federelemente 25 auf, insbesondere Blattfedern.

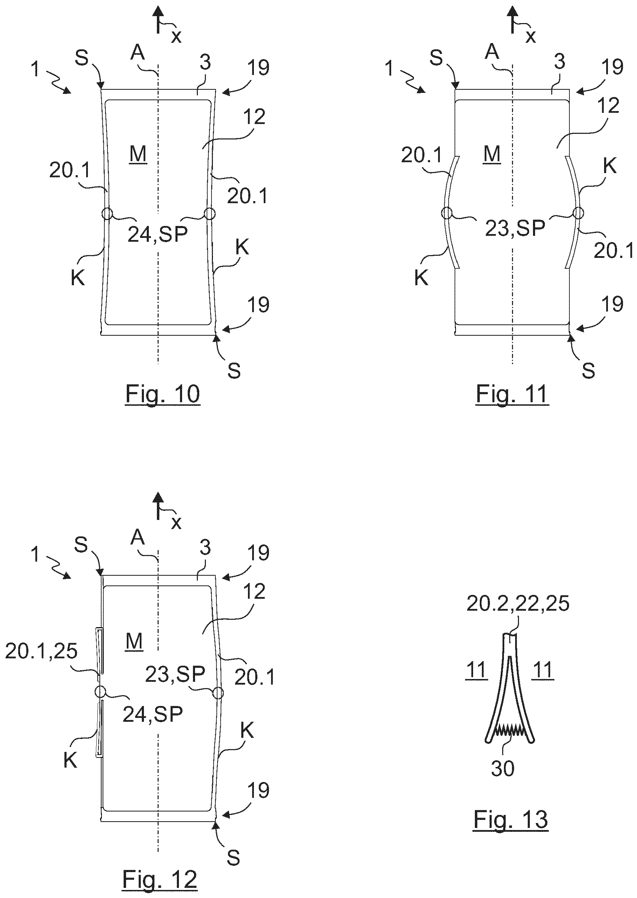

Grundsätzlich können auch die Seitenwände 20.1 der Modulbaugruppe 1 als Federelemente 25 ausgebildet sein (vgl. Figur 12). In den Figuren 1 bis 11 wird die bevorzugte Variante dargestellt, bei der lediglich die Trägereinheit 2 Federelemente 25 aufweist.

Die Steckplätze 11 sind auf der Trägerplatte 14 der Trägereinheit 2 in äquidistanter Beabstandung und mit jeweils identischer Steckplatzbreite angeordnet, wobei jeweils zwei unmittelbar benachbarte Steckplätze 11 eine gemeinsame Seitenwand 20.2 aufweisen - was allerdings nicht zwingend der Fall sein muss.

Die Steckplätze 11 der Trägereinheit 2 sind jeweils ausgebildet, um eine Montage der Modulbaugruppe 1 in horizontaler Richtung entlang der Trägerplatte 14 (also von vorne und/oder von hinten) und außerdem auch eine Montage in vertikaler Richtung in Richtung auf die Trägerplatte 14 zu, zu ermöglichen (also von oben). Die Steckplätze 11 der Trägereinheit 2 umfassen daher jeweils lediglich die Seitenwände 20.2, wobei die Seitenwände 20.2 an den Endabschnitten 19 nicht miteinander verbunden sind und auch eine Deckelplatte auf der von der Trägerplatte 14 abgewandten Seite nicht vorgesehen ist.

Eine Trägeranordnung 26 aus einer Trägereinheit 2 und mehreren Modulbaugruppen 1 ist beispielhaft in Figur 7 angedeutet, wobei zur Vereinfachung lediglich das jeweilige Außengehäuse 3 der Modulbaugruppe 1 dargestellt ist. Auch in den späteren Figuren 8 bis 12 ist das Außengehäuse 3 zur einfacheren Darstellung jeweils ohne die weiteren Komponenten der Modulbaugruppe 1 gezeigt.

Die Seitenwände 20.1 der Modulbaugruppe 1 weisen zumindest im Wesentlichen eine komplementäre Form der Seitenwände 20.2 bzw. der Befestigungshalterungen 22 der Trägereinheit 2 auf, so dass das Außengehäuse 3 der Modulbaugruppe 1 in seinem montierten Zustand formschlüssig innerhalb des Steckplatzes 11 aufgenommen ist. In Figur 7 sind beispielhaft drei Modulbaugruppen 1 formschlüssig in der Trägereinheit 2 montiert dargestellt.

Optional kann vorgesehen sein, dass die Modulbaugruppe 1 ein Rastmittel 27 und die Trägereinheit 2 ein Gegenrastmittel 28 aufweist, um die Modulbaugruppe 1 innerhalb des Steckplatzes 11 in zumindest einer Einschubposition lösbar zu verrasten (z. B. in der vollständig eingeschobenen Position). In dem in Figur 7 dargestellten Ausführungsbeispiel ist das Rastmittel 27 als Ausnehmung innerhalb der Seitenwände 20.1 der Modulbaugruppe 1 und das Gegenrastmittel 28 als Rastnase der Seitenwände 20.2 bzw. Federelemente 25 der Trägereinheit 2 ausgebildet. Optional können auch mehrere Rastmittel 27 und/oder Gegenrastmittel 28 vorgesehen sein, um die Modulbaugruppe 1 gegebenenfalls in mehreren Auszugs- oder Einschubpositionen innerhalb der Trägereinheit 2 lösbar zu fixieren. In einer bevorzugten Variante sind Rastmittel 27 und Gegenrastmittel 28 jeweils zumindest im Wesentlichen mittig zwischen den beiden Endabschnitten 19 angeordnet, beispielsweise an dem Scheitelpunkt SP der jeweiligen gedachten Kurve K.

In der Trägerplatte 14 der Trägereinheit 2 können vorzugsweise Öffnungen 29 unmittelbar vor und/oder hinter den Steckplätzen 11 ausgebildet sein. Beispielhaft sind im Bereich der vorderseitigen Schnittstelle der Trägereinheit 2 den jeweiligen Steckplätzen 11 zugeordnete Öffnungen 29 in der Trägerplatte 14 ausgebildet. Entsprechende Öffnungen 29 können grundsätzlich aber auch im rückseitigen Bereich der Trägereinheit 2 angeordnet sein. Durch die Öffnungen 29 können die Modulbaugruppen 1 für einen Techniker einfacher montierbar und demontierbar sein. Beispielsweise kann eine in einem Steckplatz 11 montierte Modulbaugruppe 1 aufgrund der Öffnung 29 mit einer Hand gut ergriffen werden, um sie anschließend mit einer ausreichenden Kraft entgegen der Federkräfte und/oder einer optionalen Verrastung aus dem Steckplatz 11 herauszuziehen.

In der Trägerplatte 14 der Trägereinheit 2 können optional auch noch weitere Ausnehmungen bzw. Öffnungen oder Kanäle (nicht dargestellt) zur Durchführung von faseroptischen Leitungen ausgebildet sein (beispielhaft im Bereich der vorderseitigen Schnittstelle der Trägereinheit 2 und/oder im rückseitigen Bereich der Trägereinheit 2).

Anhand der Figuren 8 bis 12 sollen einige Beispiele für mögliche Geometrien des Außengehäuses 3 der Modulbaugruppe 1 - und damit auch der Steckplätze 11 entsprechend korrespondierender Trägereinheiten 2 demonstriert werden.

In dem Ausführungsbeispiel der Figuren 1 bis 7 weist die Seitenwand 20.1 einen kontinuierlichen, kurvigen Verlauf auf bzw. folgt einer gedachten, gekrümmten Kurve K gleichmäßig. Es kann allerdings, wie in Figur 8 dargestellt, auch vorgesehen sein, dass die Seitenwand 20.1 der Modulbaugruppe 1 einen mehrstufigen Verlauf aufweist, also der Kurve K stufig folgt, wobei vorzugsweise eine möglichst große Übereinstimmung zwischen dem Verlauf der Seitenwand 20.1 und der gedachten, gekrümmten Kurve K vorgesehen ist, also insbesondere möglichst viele Berühr- und/oder Schnittpunkte.

Die Seitenwand 20.1 kann eine beliebige stufige oder polygonale Form aufweisen. Beispielsweise können auch die Wellenabschnitte zur Annäherung an die gedachte Kurve K vorgesehen sein, wie in Figur 9 dargestellt.

In einer bevorzugten Variante verläuft das Außengehäuse 3 der Modulbaugruppe 1 konvex und die Steckplätze 11 der Trägereinheit 2 konkav, wie in dem Ausführungsbeispiel der Figuren 1 bis 7 gezeigt. Alternativ kann aber auch vorgesehen sein, dass das Außengehäuse 3 der Modulbaugruppe 1 konvex und der Steckplatz 11 der Trägereinheit 2 konkav verläuft, wie in Figur 10 dargestellt.

Des Weiteren erstrecken sich die Seitenwände 20.1 der Modulbaugruppe 1 gemäß den Figuren 1 bis 7 vollständig zwischen den beiden Enden der Modulbaugruppe 1, wobei aber grundsätzlich auch nur eine abschnittsweise Erstreckung zwischen den Endabschnitten 19 ausreichend sein kann, also auch ein von den Enden beabstandeter Verlauf, wie in Figur 11 dargestellt. Die Seitenwände 20.1 der Modulbaugruppe 1 der Figur 11 verlaufen somit nicht bis zu den jeweiligen Enden und sind in einem mittleren Abschnitt entlang der Mittenachse A auf der Bodenplatte 12 des Außengehäuses 3 der Modulbaugruppe 1 angeordnet.

An dieser Stelle sei erwähnt, dass die Seitenwände 20.1 der Modulbaugruppe 1 grundsätzlich auch segmentiert bzw. mehrteilig ausgebildet sein können. Es können somit insbesondere entlang der Mittenachse A mehrere unterbrochene und gegebenenfalls auch voneinander beabstandete Seitenwandsegmente vorgesehen sein, die insgesamt wiederum eine gemeinsame "Seitenwand" 20.1 bilden, die den vorgesehenen kurvigen und/oder mehrstufigen Verlauf aufweist. Auf dieselbe Weise können auch die Seitenwände 20.2 des Steckplatzes 11 der Trägereinheit 2 unterbrochen sein, insbesondere auch, wenn die Seitenwände 20.2 der Trägereinheit 2 als Federelemente 25 ausgebildet sind oder Federelemente 25 aufweisen. Insbesondere können in diesem Fall mehrere Federelemente 25 entlang der Mittenachse A versetzt angeordnet sein.

Anhand des Ausführungsbeispiels der Figur 12 soll schließlich noch verdeutlicht werden, dass der Verlauf der beiden Seitenwände 20.1 einer gemeinsamen Modulbaugruppe 1 nicht übereinstimmen bzw. nicht spiegelsymmetrisch zu der Mittenachse A verlaufend ausgebildet sein muss. In Figur 12 ist beispielhaft ein Außengehäuse 3 dargestellt, bei dem eine der Seitenwände 20.1 aus einem konkaven Federelement 25 und die andere Seitenwand 20.1 aus einer konvexen Wandung ausgebildet ist. Die Modulbaugruppe 1 kann daher beispielsweise in einen Steckplatz 11 eingefügt werden, der auf einer Seite der Mittenachse A (in Montagerichtung x auf der rechten Seite) einen konkaven Rücksprung 24, vorzugsweise mit einem Federelement 25, und auf der gegenüberliegenden Seite der Mittenachse A einen konvexen Vorsprung 23 aufweist, vorzugsweise ohne Federelement 25. Die elastischen Komponenten für den Kraftschluss können somit auch zwischen Steckplatz 11 und Außengehäuse 3 der Modulbaugruppe 1 aufgeteilt sein.

In Figur 13 ist eine Variante der Erfindung dargestellt, bei der die Federkraft der Federelemente 25 einer Befestigungshalterung 22 einer Trägereinheit 2 erhöht wurde. Die dargestellte Befestigungshalterung 22 ist zwischen zwei Steckplätzen 11 angeordnet und weist ein von beiden Steckplätzen 11 genutztes Federelement 25 auf. An einem oder beiden Endabschnitten des Federelements 25 kann optional ein Zusatzfederelement 30 zur Erhöhung der Federkraft in Richtung auf die Mittenachse A vorgesehen sein. Bei dem Zusatzfederelement 30 kann es sich beispielsweise um eine Spiralfeder handeln.

## Patentansprüche

1. Modulbaugruppe (1) für die faseroptische Verteilertechnik, die entlang einer Montagerichtung in einem Steckplatz (11) einer separaten Trägereinheit (2) montierbar ist, mit einem Mittenbereich (M), durch den eine in Montagerichtung (x) ausgerichtete Mittenachse (A) verläuft, und zwei Seitenbereichen (S), die sich jeweils an den Mittenbereich (M) relativ zu der Mittenachse (A) gegenüberliegend anschließen und jeweils eine Seitenwand (20.1) aufweisen,
**dadurch gekennzeichnet, dass**
wenigstens eine der Seitenwände (20.1) zumindest abschnittsweise entlang der Mittenachse (A) einen kurvigen, den seitlichen Abstand (d) zur Mittenachse (A) verändernden Verlauf aufweist, so dass die wenigstens eine Seitenwand (20.1) zumindest einen Vor- oder Rücksprung (23, 24, SP) für eine formschlüssige Montage in dem Steckplatz (11) der Trägereinheit (2) ausbildet.

2. Modulbaugruppe (1) nach Anspruch 1,
**dadurch gekennzeichnet, dass**
die wenigstens eine Seitenwand (20.1) zur Veränderung des seitlichen Abstandes (d) entlang der Mittenachse (A) einen kontinuierlichen Verlauf aufweist, wobei der Vor- oder Rücksprung vorzugsweise durch wenigstens einen Scheitel- oder Sattelpunkt (SP) des kurvigen Verlaufs ausgebildet ist.

3. Modulbaugruppe (1) nach Anspruch 1 oder 2,
**dadurch gekennzeichnet, dass**
die wenigstens eine Seitenwand (20.1) in einer zur Montagerichtung (x) orthogonalen Richtung einen elliptischen Verlauf ausbildet, vorzugsweise einen konkaven oder konvexen Verlauf.

4. Modulbaugruppe (1) für die faseroptische Verteilertechnik, die entlang einer Montagerichtung in einem Steckplatz (11) einer separaten Trägereinheit (2) montierbar ist, mit einem Mittenbereich (M), durch den eine in Montagerichtung (x) ausgerichtete Mittenachse (A) verläuft, und zwei Seitenbereichen (S), die sich jeweils an den Mittenbereich (M) relativ zu der Mittenachse (A) gegenüberliegend anschließen und jeweils eine Seitenwand (20.1) aufweisen,
**dadurch gekennzeichnet, dass**
wenigstens eine der Seitenwände (20.1) zumindest abschnittsweise entlang der Mittenachse (A) einen mehrstufigen, den seitlichen Abstand (d) zur Mittenachse (A) verändernden Verlauf aufweist, so dass die wenigstens eine Seitenwand (20.1) zumindest einen Vor- oder Rücksprung (23, 24, SP) für eine formschlüssige Montage in dem Steckplatz (11) der Trägereinheit (2) ausbildet.

5. Modulbaugruppe (1) nach einem der Ansprüche 1 bis 4,
**dadurch gekennzeichnet, dass**
wenigstens einer der Seitenbereiche (S) elastisch ausgebildet ist.

6. Modulbaugruppe (1) nach einem der Ansprüche 1 bis 5,
**dadurch gekennzeichnet, dass**
sich der seitliche Abstand (d) zur Mittenachse (A) der wenigstens einen Seitenwand (20.1) entlang der Montagerichtung (x) und außerdem auch quer zu der Montagerichtung (x) verändert.

7. Trägereinheit (2) für die faseroptische Verteilertechnik, mit einer Trägerplatte (14), welche wenigstens einen Steckplatz (11) für jeweils zumindest eine Modulbaugruppe (1) aufweist, der eine in einer Montagerichtung (x) der Modulbaugruppe (1) ausgerichtete Mittenachse (A) aufweist, und mit jeweils einer mit der Trägerplatte (14) verbundenen Befestigungsvorrichtung (21) zur formschlüssigen Befestigung der Modulbaugruppe (1) in dem wenigstens einen Steckplatz (11), wobei die Befestigungsvorrichtung (21) zwei Befestigungshalterungen (22) aufweist, welche jeweils an einem relativ zu der Mittenachse (A) seitlichen Ende des Steckplatzes (11) ausgebildet sind, wobei jede Befestigungshalterung (22) jeweils eine in den Steckplatz (11) gerichtete Seitenwand (20.2) aufweist, und wobei wenigstens eine der Befestigungshalterungen (22) elastisch ausgebildet ist, wobei wenigstens eine der Seitenwände (20.2) zumindest abschnittsweise entlang der Mittenachse (A) einen kurvigen, den seitlichen Abstand (d) zur Mittenachse (A) verändernden Verlauf aufweist, so dass die wenigstens eine Seitenwand (20.2) zumindest einen Vor- oder Rücksprung (23, 24, SP) für die formschlüssige Montage der Modulbaugruppe (1) in dem Steckplatz (11) ausbildet,
**dadurch gekennzeichnet, dass**
der zumindest eine Vor- oder Rücksprung (23, 24, SP) in einem von den Endabschnitten (19) der Seitenwände (20.2) beabstandeten, mittleren Abschnitt ausgebildet ist.

8. Trägereinheit (2) für die faseroptische Verteilertechnik, mit einer Trägerplatte (14), welche wenigstens einen Steckplatz (11) für jeweils zumindest eine Modulbaugruppe (1) aufweist, der eine in einer Montagerichtung (x) der Modulbaugruppe (1) ausgerichtete Mittenachse (A) aufweist, und mit jeweils einer mit der Trägerplatte (14) verbundenen Befestigungsvorrichtung (21) zur formschlüssigen Befestigung der Modulbaugruppe (1) in dem wenigstens einen Steckplatz (11), wobei die Befestigungsvorrichtung (21) zwei Befestigungshalterungen (22) aufweist, welche jeweils an einem relativ zu der Mittenachse (A) seitlichen Ende des Steckplatzes (11) ausgebildet sind, wobei jede Befestigungshalterung (22) jeweils eine in den Steckplatz (11) gerichtete Seitenwand (20.2) aufweist, und wobei wenigstens eine der Befestigungshalterungen (22) elastisch ausgebildet ist,
**dadurch gekennzeichnet, dass**
wenigstens eine der Seitenwände (20.2) zumindest abschnittsweise entlang der Mittenachse (A) einen mehrstufigen, den seitlichen Abstand (d) zur Mittenachse (A) verändernden Verlauf aufweist, so dass die wenigstens eine Seitenwand (20.2) zumindest einen Vor- oder Rücksprung (23, 24, SP) für die formschlüssige Montage der Modulbaugruppe (1) in dem Steckplatz (11) ausbildet, wobei der zumindest eine Vor- oder Rücksprung (23, 24, SP) in einem von den Endabschnitten (19) der Seitenwände (20.2) beabstandeten, mittleren Abschnitt ausgebildet ist.

9. Trägereinheit (2) nach Anspruch 7 oder 8,
**dadurch gekennzeichnet, dass**
wenigstens eine der Befestigungshalterungen (22) ein entlang der entsprechenden Seitenwand (20.2) verlaufendes Federelement (25) aufweist.

10. Trägereinheit (2) nach Anspruch 9,
**dadurch gekennzeichnet, dass**
das Federelement (25) aus mehreren entlang der Seitenwand (20.2) angeordneten Einzelfedern zusammengesetzt ist.

11. Trägereinheit (2) nach einem der Ansprüche 7 bis 10,
**dadurch gekennzeichnet, dass**
der Steckplatz (11) ausgebildet ist, eine Montage der Modulbaugruppe (1) in horizontaler Richtung entlang der Trägerplatte (14) und außerdem auch in vertikaler Richtung, in Richtung auf die Trägerplatte (14), zu ermöglichen.

12. Trägereinheit (2) nach einem der Ansprüche 7 bis 11,
**dadurch gekennzeichnet, dass**
die Befestigungsvorrichtung (21) entweder einteilig mit der Trägerplatte (14) ausgebildet oder an der Trägerplatte (14) befestigt ist.

13. Trägeranordnung (26), aufweisend eine Trägereinheit (2) gemäß einem der Ansprüche 7 bis 12 sowie zumindest eine in einem der Steckplätze (11) montierte Modulbaugruppe (1) gemäß einem der Ansprüche 1 bis 6, wobei die Seitenwände (20.1) der Modulbaugruppe (1) zumindest im Wesentlichen eine komplementäre Form der Seitenwand (20.2) derjeweils zugeordneten Befestigungshalterung (22) aufweisen, so dass die Modulbaugruppe (1) in ihrem montierten Zustand formschlüssig innerhalb der Befestigungsvorrichtung (21) aufgenommen ist.

14. Trägeranordnung (26) nach Anspruch 13,
**dadurch gekennzeichnet, dass**
die Modulbaugruppe (1) ein Rastmittel (27) und die Befestigungsvorrichtung (21) der Trägereinheit (2) ein Gegenrastmittel (28) aufweist, um die Modulbaugruppe (1) innerhalb der Befestigungsvorrichtung (21) in zumindest einer Einschubposition lösbar zu verrasten.

## Claims

1. Module assembly (1) for the fibre-optic distribution industry, which can be mounted along a mounting direction in a slot (11) in a separate carrier unit (2), with a centre region (M) through which a centre axis (A) oriented in the mounting direction (x) runs, and two side regions (S), each of which is connected to the centre region (M) opposite each another relative to the centre axis (A) and each of which has a side wall (20.1),
**characterized in that**
at least one of the side walls (20.1) has, at least in certain sections along the centre axis (A), a curvy profile changing the lateral distance (d) from the centre axis (A) such that the at least one side wall (20.1) forms at least one protrusion or setback portion (23, 24, SP) for form-fitting mounting in the slot (11) in the carrier unit (2).

2. Module assembly (1) according to Claim 1,
**characterized in that**
the at least one side wall (20.1) for changing the lateral distance (d) along the centre axis (A) has a continuous profile, wherein the protrusion or setback portion is preferably formed by at least one vertex or saddle point (SP) of the curvy profile.

3. Module assembly (1) according to Claim 1 or 2,
**characterized in that**
the at least one side wall (20.1) forms an elliptical profile, preferably a concave or convex profile, in a direction orthogonal to the mounting direction (x).

4. Module assembly (1) for the fibre-optic distribution industry, which can be mounted along a mounting direction in a slot (11) in a separate carrier unit (2), with a centre region (M) through which a centre axis (A) oriented in the mounting direction (x) runs, and two side regions (S), each of which is connected to the centre region (M) opposite each another relative to the centre axis (A) and each of which has a side wall (20.1),
**characterized in that**
at least one of the side walls (20.1) has, at least in certain sections along the centre axis (A), a multi-step profile changing the lateral distance (d) from the centre axis (A) such that the at least one side wall (20.1) forms at least one protrusion or setback portion (23, 24, SP) for form-fitting mounting in the slot (11) in the carrier unit (2).

5. Module assembly (1) according to any of Claims 1 to 4,
**characterized in that**
at least one of the side regions (S) is elastic.

6. Module assembly (1) according to any of Claims 1 to 5,
**characterized in that**
the lateral distance (d) from the centre axis (A) of the at least one side wall (20.1) changes along the mounting direction (x) and also transversely with respect to the mounting direction (x).

7. Carrier unit (2) for the fibre-optic distribution industry, having a carrier plate (14), which has at least one slot (11) for at least one module assembly (1) each, which slot has a centre axis (A) oriented in a mounting direction (x) of the module assembly (1), and having in each case a fastening device (21) connected to the carrier plate (14) for the form-fitting fastening of the module assembly (1) in the at least one slot (11), wherein the fastening device (21) has two fastening brackets (22), which are each formed at a lateral end of the slot (11) relative to the centre axis (A), wherein each fastening bracket (22) in each case has a side wall (20.2) facing into the slot (11), and wherein at least one of the fastening brackets (22) is elastic, wherein at least one of the side walls (20.2) has, at least in certain sections along the centre axis (A), a curvy profile changing the lateral distance (d) from the centre axis (A) such that the at least one side wall (20.2) forms at least one protrusion or setback portion (23, 24, SP) for form-fitting mounting of the module assembly (1) in the slot (11),
**characterized in that**
the at least one protrusion or setback portion (23, 24, SP) is formed in a central portion which is spaced apart from the end portions (19) of the side walls (20.2).

8. Carrier unit (2) for the fibre-optic distribution industry, having a carrier plate (14), which has at least one slot (11) for at least one module assembly (1) each, which slot has a centre axis (A) oriented in a mounting direction (x) of the module assembly (1), and having in each case a fastening device (21) connected to the carrier plate (14) for the form-fitting fastening of the module assembly (1) in the at least one slot (11), wherein the fastening device (21) has two fastening brackets (22), which are each formed at a lateral end of the slot (11) relative to the centre axis (A), wherein each fastening bracket (22) in each case has a side wall (20.2) facing into the slot (11), and wherein at least one of the fastening brackets (22) is elastic,
**characterized in that**
at least one of the side walls (20.2) has, at least in certain sections along the centre axis (A), a multi-step profile changing the lateral distance (d) from the centre axis (A) such that the at least one side wall (20.2) forms at least one protrusion or setback portion (23, 24, SP) for form-fitting mounting of the module assembly (1) in the slot (11), wherein the at least one protrusion or setback portion (23, 24, SP) is formed in a central portion which is spaced apart from the end portions (19) of the side walls (20.2).

9. Carrier unit (2) according to Claim 7 or 8,
**characterized in that**
at least one of the fastening brackets (22) has a spring element (25) extending along the corresponding side wall (20.2).

10. Carrier unit (2) according to Claim 9,
**characterized in that**
the spring element (25) is composed of a plurality of individual springs arranged along the side wall (20.2).

11. Carrier unit (2) according to any of Claims 7 to 10,
**characterized in that**
the slot (11) is designed to allow the module assembly (1) to be mounted in the horizontal direction along the carrier plate (14), and additionally also in the vertical direction, towards the carrier plate (14).

12. Carrier unit (2) according to any of Claims 7 to 11,
**characterized in that**
the fastening device (21) is either formed integrally with the carrier plate (14) or fastened to the carrier plate (14).

13. Carrier arrangement (26), comprising a carrier unit (2) according to any of Claims 7 to 12 and at least one module assembly (1), which is mounted in one of the slots (11), according to any of Claims 1 to 6, wherein the side walls (20.1) of the module assembly (1) have at least substantially a complementary shape of the side wall (20.2) of the respectively assigned fastening bracket (22) such that the module assembly (1) in its mounted state is accommodated in a form-fitting manner within the fastening device (21).

14. Carrier arrangement (26) according to Claim 13,
**characterized in that**
the module assembly (1) has a latching means (27) and the fastening device (21) of the carrier unit (2) has a mating latching means (28) in order to releasably latch the module assembly (1) in at least one insertion position within the fastening device (21).

## Revendications

1. Ensemble modulaire (1) pour la technique de distribution de fibres optiques pouvant se monter le long d'une direction de montage dans un emplacement (11) d'une unité support (2) séparée, avec une zone centrale (M) par laquelle passe un axe central (A) orienté dans la direction de montage (x), et deux zones latérales (S) qui se raccordent chacune à la zone centrale (M) de manière opposée l'une à l'autre par rapport à l'axe central (A) et présentent chacune une paroi latérale (20.1),
**caractérisé en ce que**,
au moins l'une des parois latérales (20.1) présente, au moins en partie, le long de l'axe central (A), un tracé incurvé modifiant la distance latérale (d) par rapport à l'axe central (A), de sorte que ladite au moins une paroi latérale (20.1) forme au moins une partie en saillie ou en retrait (23, 24, SP) pour un montage par engagement positif dans l'emplacement (11) de l'unité support (2).

2. Ensemble modulaire (1) selon la revendication 1,
**caractérisé en ce que**,
pour la modification de la distance latérale (d) par rapport à l'axe central (A), ladite au moins une paroi latérale (20.1) présente un tracé continu, la partie en saillie ou en retrait étant formée de préférence par au moins un point culminant ou un point de col (SP) du tracé incurvé.

3. Ensemble modulaire (1) selon la revendication 1 ou 2,
**caractérisé en ce que**,
ladite au moins une paroi latérale (20.1) forme un tracé elliptique, de préférence un tracé concave ou convexe, dans une direction orthogonale à la direction de montage (x).

4. Ensemble modulaire (1) pour la technique de distribution de fibres optiques pouvant se monter le long d'une direction de montage dans un emplacement (11) d'une unité support (2) séparée, avec une zone centrale (M) par laquelle passe un axe central (A) orienté dans la direction de montage (x), et deux zones latérales (S) qui se raccordent chacune à la zone centrale (M) de manière opposée l'une à l'autre par rapport à l'axe central (A) et présentent chacune une paroi latérale (20.1),
**caractérisé en ce que**,
au moins l'une des parois latérales (20.1) présente, au moins en partie, le long de l'axe central (A), un tracé étagé modifiant la distance latérale (d) par rapport à l'axe central (A), de sorte que ladite au moins une paroi latérale (20.1) forme au moins une partie en saillie ou en retrait (23, 24, SP) pour un montage par engagement positif dans l'emplacement (11) de l'unité support (2).

5. Ensemble modulaire (1) selon l'une des revendications 1 à 4,
**caractérisé en ce que**,
au moins l'une des zones latérales (S) est réalisée de manière élastique.

6. Ensemble modulaire (1) selon l'une des revendications 1 à 5,
**caractérisé en ce que**,
la distance latérale (d) par rapport à l'axe central (A) de ladite au moins une paroi latérale (20.1) change le long de la direction de montage (x), ainsi que perpendiculairement à la direction de montage (x).

7. Unité support (2) pour la technique de distribution de fibres optiques, avec une plaque support (14) offrant au moins un emplacement (11) pour respectivement au moins un ensemble modulaire (1) présentant un axe central (A) orienté dans une direction de montage (x) de l'ensemble modulaire (1), et avec respectivement un dispositif de fixation (21) relié à la plaque support (14) pour la fixation par engagement positif de l'ensemble modulaire (1) dans ledit au moins un emplacement (11), le dispositif de fixation (21) présentant deux attaches de fixation (22) formées chacune à une extrémité latérale de l'emplacement (11) par rapport à l'axe central (A), chaque attache de fixation (22) présentant respectivement une paroi latérale (20.2) orientée vers l'intérieur de l'emplacement (11), et au moins l'une des attaches de fixation (22) étant réalisée de manière élastique, au moins l'une des parois latérales (20.2) présentant, au moins en partie, le long de l'axe central (A), un tracé incurvé modifiant la distance latérale (d) par rapport à l'axe central (A), de sorte que ladite au moins une paroi latérale (20.2) forme au moins une partie en saillie ou en retrait (23, 24, SP) pour le montage par engagement positif de l'ensemble modulaire (1) dans l'emplacement (11)
**caractérisée en ce que**,
ladite au moins une partie en saillie ou en retrait (23, 24, SP) est formée dans une zone centrale à distance des zones d'extrémité (19) des parois latérales (20.2).

8. Unité support (2) pour la technique de distribution de fibres optiques, avec une plaque support (14) offrant au moins un emplacement (11) pour respectivement au moins un ensemble modulaire (1) présentant un axe central (A) orienté dans une direction de montage (x) de l'ensemble modulaire (1), et avec respectivement un dispositif de fixation (21) relié à la plaque support (14) pour la fixation par engagement positif de l'ensemble modulaire (1) dans ledit au moins un emplacement (11), le dispositif de fixation (21) présentant deux attaches de fixation (22) formées chacune à une extrémité latérale de l'emplacement (11) par rapport à l'axe central (A), chaque attache de fixation (22) présentant respectivement une paroi latérale (20.2) orientée vers l'intérieur de l'emplacement (11), et au moins l'une des attaches de fixation (22) étant réalisée de manière élastique,
**caractérisée en ce que**,
au moins l'une des parois latérales (20.2) présente, au moins en partie, le long de l'axe central (A), un tracé étagé modifiant la distance latérale (d) par rapport à l'axe central (A), de sorte que ladite au moins une paroi latérale (20.2) forme au moins une partie en saillie ou en retrait (23, 24, SP) pour le montage par engagement positif de l'ensemble modulaire (1) dans l'emplacement (11), ladite au moins une partie en saillie ou en retrait (23, 24, SP) étant formée dans une zone centrale à distance des zones d'extrémité (19) des parois latérales (20.2).

9. Unité support (2) selon la revendication 7 ou 8,
**caractérisée en ce que**,
au moins l'une des attaches de fixation (22) présente un élément ressort (25) courant le long de la paroi latérale (20.2) correspondante.

10. Unité support (2) selon la revendication 9,
**caractérisée en ce que**,
l'élément ressort (25) est composé de plusieurs ressorts individuels disposés le long de la paroi latérale (20.2).

11. Unité support (2) selon l'une des revendications 7 à 10,
**caractérisée en ce que**,
l'emplacement (11) est aménagé pour permettre un montage de l'ensemble modulaire (1) dans la direction horizontale le long de la plaque support (14) et, en outre, également dans la direction verticale, en direction de la plaque support (14).

12. Unité support (2) selon l'une des revendications 7 à 11,
**caractérisée en ce que**,
le dispositif de fixation (21) est soit réalisé d'un seul tenant avec la plaque support (14) soit fixé sur la plaque support (14).

13. Agencement support (26) présentant une unité support (2) selon l'une des revendications 7 à 12 ainsi qu'au moins un ensemble modulaire (1) selon l'une des revendications 1 à 6 monté dans l'un des emplacements (11), les parois latérales (20.1) de l'ensemble modulaire (1) ayant au moins sensiblement une forme complémentaire à celle de la paroi latérale (20.2) du support de fixation (22) correspondant, de sorte que l'ensemble modulaire (1) soit logé, dans son état monté, par engagement positif à l'intérieur du dispositif de fixation (21).

14. Agencement support (26) selon la revendication 13,
**caractérisé en ce que**,
l'ensemble modulaire (1) présente un moyen d'encliquetage (27) et le dispositif de fixation (21) de l'unité support (2) présente un moyen contre-encliquetage (28) pour encliqueter l'ensemble modulaire (1) de manière amovible à l'intérieur du dispositif de fixation (21) dans au moins une position d'insertion.
